# EUROPÄISCHE PATENTSCHRIFT

(11) **EP 0 519 438 B1**
(45) Veröffentlichungstag und Bekanntmachung des Hinweises auf die Patenterteilung: **31.01.1996**
(21) Anmeldenummer: 92110254.7
(22) Anmeldetag: 17.06.1992
(51) Int. Cl.: B29C 45/17

(54) **Schnellspannvorrichtung**
Quick fastening apparatus
Dispositif de fixation rapide

(30) Priorität: 18.06.1991 DE 9107470 U
(43) Veröffentlichungstag der Anmeldung: 23.12.1992
(73) Patentinhaber: HA-WI KUNSTSTOFFE GmbH, D-57334 Bad Laasphe (DE)
(72) Erfinder: Nicke, Horst, W-3563 Dautphetal 3 (DE); Hackler, Hans, W-5928 Bad Laasphe-Rückershausen (DE); Wied, Hans-Georg, W-5928 Bad Laasphe-Rückershausen (DE)
(74) Vertreter: Olbricht, Karl Heinrich, Dipl.-Phys.

(56) Entgegenhaltungen:
- EP-A- 0 388 335
- DE-U- 9 100 937
- FR-A- 973 999
- PLASTVERARBEITER Bd. 42, Nr. 7, Juli 1991, SPEYER/RHEIN DE Seite 104, XP000259150 'Spannvorrichtung'

## Beschreibung

Die vorliegende Erfindung betrifft eine Schnellspannvorrichtung gemäß dem Oberbegriff von Anspruch 1.

In der Kunststoff-Verarbeitung durch Spritz- oder Druckguß wird für verschiedene Artikel meist jeweils ein Werkzeug benötigt; abhängig von der Chargengröße muß das Werkzeug bzw. die Form mehr oder weniger häufig gewechselt werden. Zum Einsatz in Großbetrieben hat man eine Automatik-Wechselanlage für z. B. vier unterschiedliche Werkzeuge vorgeschlagen, die naturgemäß einen sehr hohen Aufwand erfordert. Ansonsten werden vorhandene Maschinen gewöhnlich einzeln umgerüstet.

Zur Verkürzung der Umstellzeiten wurden Schnellspann-Vorrichtungen entwickelt, die typischerweise zwei Spannplatten aufweisen, welche mit einer zentrischen Durchgangsöffnung und einer Klemmeinrichtung versehen sind. Als solche verwendet man z. B. Exzenterbolzen, deren Verdrehung in der Aufspannplatte einen senkrecht zu ihrer Ebene darin eingesetzten Spannbolzen fixiert. Die DE-A-2 938 665 beschreibt eine Anordnung zum Aufspannen eines Werkzeugs mit einem gerillten Zentrierflansch, der durch hydraulisch betätigbare Spannschieber mit schrägen Anlageflächen von zwei Seiten her diametral gefaßt wird. Ein Adapterring gemäß DE-U-8 432 687 ist an einer Montageplatte durch eine parallel zu ihrer Ebene eingesteckte Gabel oder einen Riegelbolzen festlegbar.

Ein anderes Schnellwechselsystem benutzt beidseitig angelenkte Klauenhebel, die mittels einer Schraubspindel am Kopf der Spannplatte zusammengezogen werden können, um einen Zentrierring mit seiner Halteschräge festzulegen.

Aus der DE-A-2 947 938 sind ineinandersteckbare Spannring-Paare mit Bajonettverbindung bekannt, die ähnlich laut DE-U-9 100 937 an Aufspannplatten verwendet wird, wobei ein in ihrem Mittelloch begrenzt schwenkbarer, jedoch nur in Axialrichtung einsetzbarer Bajonettring mit einem abgekröpften Spannhebel einstückig ist. Die Spannplatte hat rückseitig eine der Dicke des Spannrings angepaßte V-Abflachung, welche die Mittenbohrung als Stufe umgibt und eine Einlauf-Erweiterung aufweist, die aber wegen einer Einengung dem Durchmesser bzw. Außenumfang des Spannrings nicht angepaßt ist und daher sein seitlich-radiales Einstecken oder Entnehmen nicht zuläßt.

Nach dem Stand der Technik ist es nicht immer einfach, den Werkzeugwechsel rasch und zuverlässig durchzuführen. Das Spannen erfolgt mit manchen Vorrichtungen nicht sehr genau oder nicht sicher genug, so daß durch die Betriebsbeanspruchung eine störende Lockerung eintreten kann. Auch die Handhabung läßt zum Teil erheblich zu wünschen übrig.

Es ist ein wichtiges Ziel der Erfindung, unter Überwindung der Nachteile des Standes der Technik eine neuartige Schnellspannvorrichtung zu schaffen, die den Werkzeugwechsel an vorhandenen Maschinen erleichtert und dabei nicht nur die Umrüstzeiten minimiert, sondern auch zum bequemen Nachrüsten bestehender Maschinenparks gut geeignet ist. Der Aufbau soll konstruktiv besonders einfach sein, um eine kostengünstige Fertigung zu erlauben. Die Vorrichtung soll sich ferner bei größtmöglicher Montagegenauigkeit problemlos handhaben lassen.

Hauptmerkmale der Erfindung sind im kennzeichnenden Teil von Anspruch 1 angegeben. Weiterbildungen sind Gegenstand der Ansprüche 2 bis 12.

Insbesondere für Spritzgießmaschinen, die eine Schließeinheit für Werkzeughälften mit einem Zentrierring haben, der abschnittsweise radial auswärts vorspringende Keilflächen hat, durch eine Mittenbohrung einer Spannplatte axial einführbar und rückseitig durch einen Spannring mit radial einspringenden Gegenkeilflächen bajonettartig selbsthemmend arretierbar ist, wobei die Spannplatte rückseitig eine der Dicke des Spannrings angepaßte Abflachung hat, welche die Mittenbohrung als Stufe umgibt und eine Einlauf-Erweiterung aufweist, sieht die Erfindung laut Anspruch 1 vor, daß die Abflachung dem äußeren Umfang des Spannrings U-förmig angepaßt ist und daß in die Abflachung-Stufe neben der Mittenbohrung radial federnde Rasten ragen, die mit Ausnehmungen am Außenumfang des Spannrings lagefixierend zusammenwirken. Diese neuartige Gestaltung ermöglicht es, den Spannring bei montierter Vorrichtung mit einer radialen Schiebe-Bewegung zu entnehmen und wieder einzusetzen. Er kann daher im Falle von Verschleiß oder Beschädigung sehr einfach ausgetauscht werden. Auch geht die Wartung durch Säubern sowie Einölen rasch vor sich. Überaus bequem ist es möglich, den Spannring entlang der Spannplatten-Abflachung einzuführen und die richtige Position buchstäblich zu spüren. Eine zusätzliche Bewegung in Axialrichtung ist nicht erforderlich; das Ver- bzw. Entriegeln des Zentrierrings der betreffenden Werkzeughälfte geht mühelos vor sich. Sowohl die Montage als auch die Benutzung der Schnellspannvorrichtung wird dadurch im Vergleich zu den bisherigen Konstruktionen stark erleichtert. Entsprechend kurz sind die Umrüstzeiten und mithin die Stillstandszeiten der Spritzgießmaschine oder sonstigen Maschineneinheit, da die Vorrichtung auch zum Spannen auf Werkzeugmaschinen, zur Futterbefestigung auf Drehmaschinen usw. geeignet ist.

Besonders zuverlässig erfolgt die Positionierung nach Anspruch 2, indem der Spannring durch zwei einander diametral gegenüberliegende Außenumfangs-Kerben mit zwei zugeordneten Kugelrasten am Innenumfang der Stufe in derjenigen Offen-Position verrastbar ist, in welcher der Werkzeugwechsel vorgenommen wird.

Gemäß den Ansprüchen 3 bis 5 hat der Spannring am Außenumfang zwei einander gegenüberliegende Kerbenreihen, und zwar vorzugsweise zumindest drei formgleiche, unmittelbar aneinander anschließende Kerben an einer Rückflanke eines Gegenkeils. Dank dieser Anordnung bleibt der einstweilig eingerastete Spannring in seiner Winkellage, bis er mit gewolltem Zugriff entweder in die Verriegelungs- oder in die Freigabe-Stellung geschwenkt wird. Ein ungewolltes Lösen der Spannring/Zentrierring-Verbindung wird so unter Selbsthemmung der Keilfläche verhindert, und zwar auch im rauhen Betrieb der Verarbeitungsmaschine bei Schlägen und Stößen.

Günstig ist die Ausbildung gemäß Anspruch 6, wonach der Spannring außen eine Stecköffnung für ein Betätigungs-Hilfsmittel aufweist, vorzugsweise für einen Flachhebel mit Griff. Der Spannring kann in solchem Falle an bzw. in der Spannplatte verbleiben, gegebenenfalls in unverlierbarer Anordnungen. Die Möglichkeit, den Betätigungs-Flachhebel zu entnehmen, erhöht die Arbeitssicherheit beträchtlich; eine Unfallgefahr wird vermieden, ohne daß an Maschinen-Schutzgittern eine Behinderung eintritt. Entnahme-Roboter oder andere Handling-Geräte haben ungestörte Eingriffsbereiche zu den Werkzeugen. Zudem können längere Hebel verwendet werden, was z.B. bei Frauen-Arbeitsplätzen von Bedeutung ist, um mit erhöhtem Moment die Selbsthemmung - je nach Arbeitsrichtung - besser zu bewirken bzw. zu überwinden.

Nach Anspruch 7 kann die Vorrichtung mittels eines Adapters zentriert werden, indem dieser anstelle eines Zentrierrings in die sofort gänzlich freie Mittenbohrung eingepaßt und nun die Spannplatte mit einer Maschinenplatte fest verschraubt wird, worauf der Adapter entfernt und der Zentrierring der Werkzeughälfte eingesetzt wird. Dank dieser sehr genauen Montage werden Nachbesserungen entbehrlich, die bei herkömmlichen Spannvorrichtungen gelegentlich unter Gewaltanwendung versucht wurden.

Eine wichtige Ausgestaltung, für die selbständiger Schutz beansprucht wird, ist in Anspruch 8 angegeben. Danach ist in der Spannplatte an der Mittenbohrung ein radial verstellbarer Paßstift vorhanden, dessen Stärke der Weite von Außennuten am Zentrierring entspricht. Dieser kann laut Anspruch 9 vier in Winkelabständen von je 90° angeordnete Außennuten aufweisen. In eine solche Außennut kann der Paßstift eingreifen, um eine genaue Vorzentrierung der Werkzeughälfte zu gewährleisten, die den lagerichtigen Einbau sicherstellt. Für das Montieren des Bajonett-Zentrierrings auf die Maschinenplatte ist es ferner vorteilhaft, den Zentrierring gemäß Anspruch 10 mit vier Schraublöchern zu versehen, die radial innerhalb der Keilvorsprünge so angeordnet sind, daß ihre Durchmesser-Verbindungslinien unter 45° zu denjenigen der Außennuten stehen. Das ermöglicht beste Ausnutzung des vorhandenen Raums bei gutem Angriff der Befestigungsmittel.

Laut Anspruch 11 kann der Paßstift in einer Führungsbohrung längsbeweglich und in wenigstens zwei vorgegebenen Positionen verrastbar sein, was zum passungsgenauen Vorzentrieren sehr nützlich ist. Wenn der Paßstift nach Anspruch 12 federbelastet und von einer Schmalseite der Spannplatte her betätigbar ist, kann man den Justiervorgang besonders bequem durchführen.

Die Paßstift-Konstruktion gemäß den Ansprüchen 8 bis 12 bietet wichtige Vorteile, indem sich die Werkzeuge immer positionsgenau einbauen lassen, da der Paßstift den Zentrierring in den Außennuten fixiert. Wenn das Werkzeug, was öfter vorkommt, in eine bestimmte Schräglage gedreht werden muß, läßt sich der Paßstift zurückschieben, wodurch die Außennuten des Zentrierrings freigegeben werden. Es kommt hinzu, daß bereits mit dem Zentrierring versehene Werkzeuge im gegebenen Zustand auch auf Verarbeitungsmaschinen ohne Spannplatte verwendbar sind, weil die Anschlußmaße übereinstimmen; andererseits können Werkzeuge, die noch mit "alten" Spannmitteln ausgestattet sind, auch auf Maschinen mit dem anmeldungsgemäßen Schnellspannsystem ohne jegliche Umrüstung eingesetzt werden, wobei bloß der Paßstift in seine herausgezogene Position zu verschieben ist.

Weitere Merkmale, Einzelheiten und Vorteile ergeben sich aus dem Wortlaut der Ansprüche sowie aus der folgenden Beschreibung eines Ausführungsbeispiels anhand der Zeichnung. Darin zeigen:
- Fig. 1: eine auseinandergezogene Schrägansicht eines Teils eines Werkzeugs und einer zugeordneten Schnellspannvorrichtung,
- Fig. 2: eine Seitenansicht einer Schnellspannplatte,
- Fig. 3: eine maschinenseitige Stirnansicht der Schnellspannplatte von Fig. 2,
- Fig. 4: eine werkzeugseitige Stirnansicht der Schnellspannplatte von Fig. 2 bzw. Fig. 3,
- Fig. 5: eine Seitenansicht, teilweise im Schnitt, von eingebauten Schnellspannvorrichtungen mit dazwischen befindlichem, (noch) nicht eingespanntem Werkzeug,
- Fig. 6: eine Stirnansicht einer anderen Schnellspannplatte,
- Fig. 7: eine Schnittansiccht entsprechend der Linie VII-VII in Fig. 6,
- Fig. 8: eine Seitenansicht eines Spannrings und
- Fig. 9: eine Schnittansicht entsprechend der Linie IX-IX in Fig. 8.

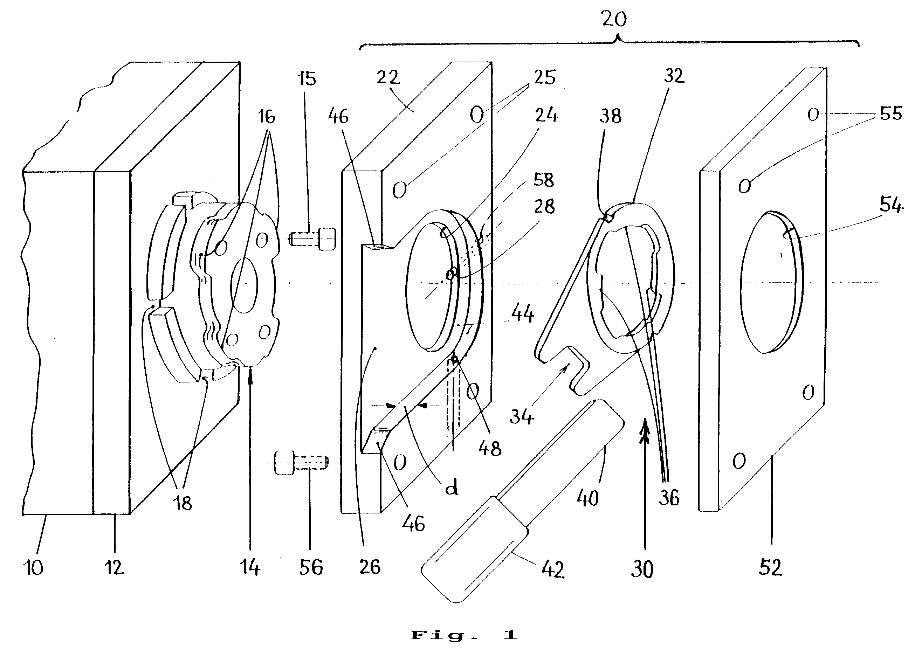

An einer in Fig. 1 schematisch angedeuteten Werkzeughälfte 10 eines Werkzeugs W (Fig. 5), das ein (nicht gezeichnetes) Formnest zur Herstellung von Kunststoff-Artikeln im Spritzgießverfahren enthält, befindet sich eine Maschinenplatte 12, die mit einem Zentrierring 14 versehen ist. Dieser ist mit Befestigungsschrauben 15 befestigt und hat Keilflächen bzw. -vorsprünge 16 zur Verriegelung mit der Spannplatte 22 einer Schnellspannvorrichtung 20. Außennuten 18, die bevorzugt in 90°-Umfangsabständen am Zentrierring 14 angeordnet sind, dienen zur lagerichtigen Befestigung der Werkzeughälfte 10 an der Spannplatte 22, die einen in einer Führungsbohrung 58 verschiebbar angeordneten Paßstift 28 aufweist (Fig. 1.) Dieser greift in eine der Längsnuten 18 ein, wenn diese Position erwünscht ist, um die Werkzeughälfte 10 zu zentrieren. Wird jedoch ein Werkzeug-Einbau in Schräglage erforderlich, so kann der Paßstift 28 nach außen bewegt und die Rastung aufgehoben werden, um das Spannen in einer gewünschten Zwischenposition durchzuführen. - Die Werkzeughälfte 10 kann mit einem Auswerfer 13 versehen sein (Fig. 5).

Die Spannplatte 22 der Vorrichtung 20 hat eine Mittenbohrung 24, deren Größe dem Zentrierring 14 angepaßt ist. Schraublöcher 25 dienen zur Aufnahme von Befestigungsschrauben 56. Soll eine Wärmdämmplatte 52 mit ihr verbunden werden, so weist diese hierzu ebenfalls Schraublöcher 55 und eine Mittenbohrung 54 auf, deren Größe der Mittenbohrung 24 der Spannplatte 22 entspricht.

Die Spannplatte 22 ist mit einer U-förmigen Abflachung bzw. Aussparung 26 versehen, die mit Einlauf-Erweiterungen 46 das bequeme Einstecken eines Spannrings 30 von der Seite her ermöglicht. Der Außenumfang 32 des Spannrings 30 ist paßgenau auf die Breite bzw. Höhe der U-förmigen Abflachung 26 abgestimmt. Zusätzlich hat der Spannring 30 am Außenumfang 32 Kerben 38, die bevorzugt einander diametral gegenüber angeordnet sind und mit Kugelrasten 48 zusammenwirken, die sich beiderseits der Mittenbohrung 24 neben einer durch die Abflachung 26 gebildeten Stufe 44 befinden. Wird der Spannring 30 in die Aussparung 26 eingeschoben, so rasten seine Kerben 28 an den Kugelrasten 48 ein, sofern der Spannring 30 die dadurch vorbestimmte Position einnimmt.

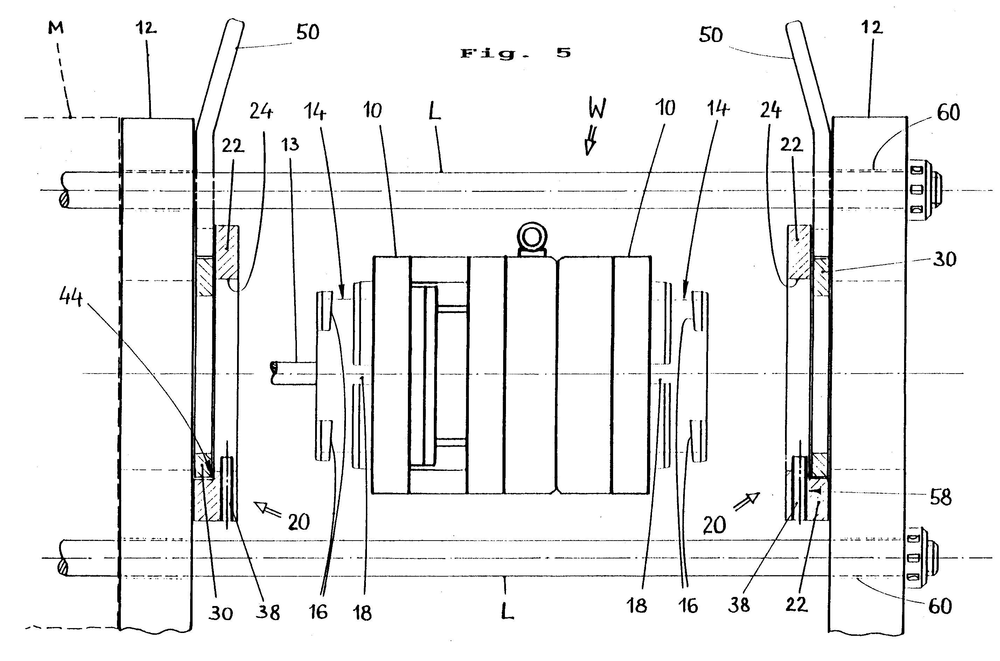

Der Spannring 30 kann mit einer Stecköffnung 34 versehen sein, um einen Flachhebel 40 einzustecken, der mit einem Griff 42 versehen ist (Fig. 1). Alternativ ist es aber auch möglich und erfindungsgemäß vorgesehen, gemäß Fig. 3 bis 5 einen Spannring 30 zu benutzen, der mit einem Flacheisen-Hebel 50 einstückig ist.

In jedem Falle hat der Spannring 30 Gegenkeilflächen 36, die den Keilflächen bzw. -vorsprüngen 16 des Zentrierrings 14 entsprechen. Wird dieser also durch die Mittenbohrung 24 der Spannplatte 22 und durch den im Offen-Position (Fig. 3 und 4) befindlichen Spannring 30 hindurchgesteckt, so kann letzterer durch einfache Betätigung des Hebels 40 bzw. 50 abwärts geschwenkt werden, wobei die Keilflächen 16 mit den Gegenkeilflächen 36 zur selbsthemmenden Verriegelung kommen. Dadurch ist die Werkzeughälfte 10 an der Schnellspannplatte 22 paßgenau festgelegt. Das Lösen erfolgt durch einfaches Hochschwenken des Hebels 40 bzw. 50.

Aus der Zusammenstellung von Fig. 5 erkennt man, daß die schematisch angedeutete Maschine M mit Leitholmen L versehen ist, auf welchen die Maschinenplatten 12 auseinander- und zusammenbewegt werden können. In der Praxis geht man so vor, daß zuerst eine Werkzeughälfte 10 (links in Fig. 5) mit der Spannplatte 22 der Schnellspannvorrichtung 20 an der zugehörigen Maschinenplatte 12 festgelegt und diese dann auf den Leitholmen L mit dem Werkzeug W zur anderen Maschinenplatte (rechts in Fig. 5) verschoben wird, worauf man die andere Werkzeughälfte 10 mit der dort befindlichen Schnellspann-vorrichtung festlegt. Die Maschinenplatten 12 sind mit Gleitbohrungen 60 zur Aufnahme der Leitholme L versehen. Üblich sind Maschinen M mit zwei oder vier Leitholmen L.

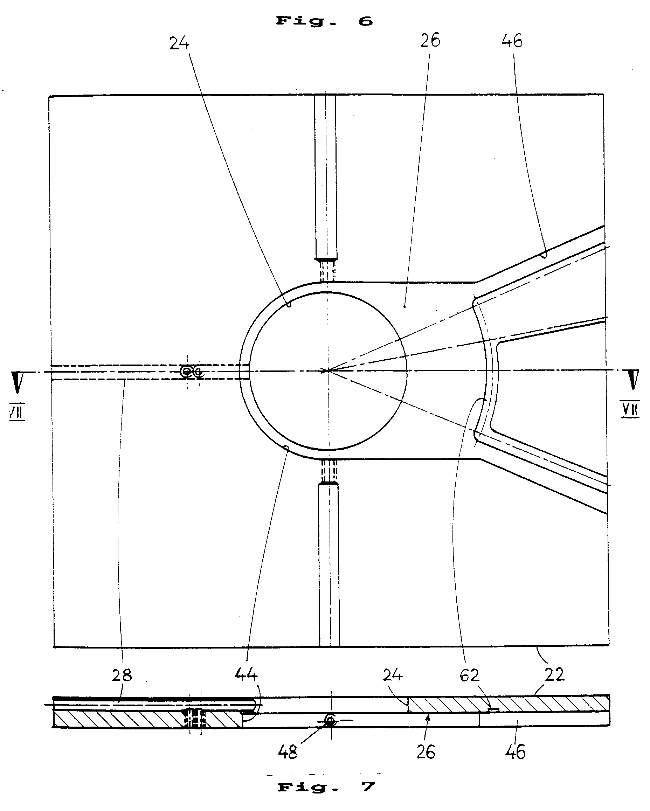

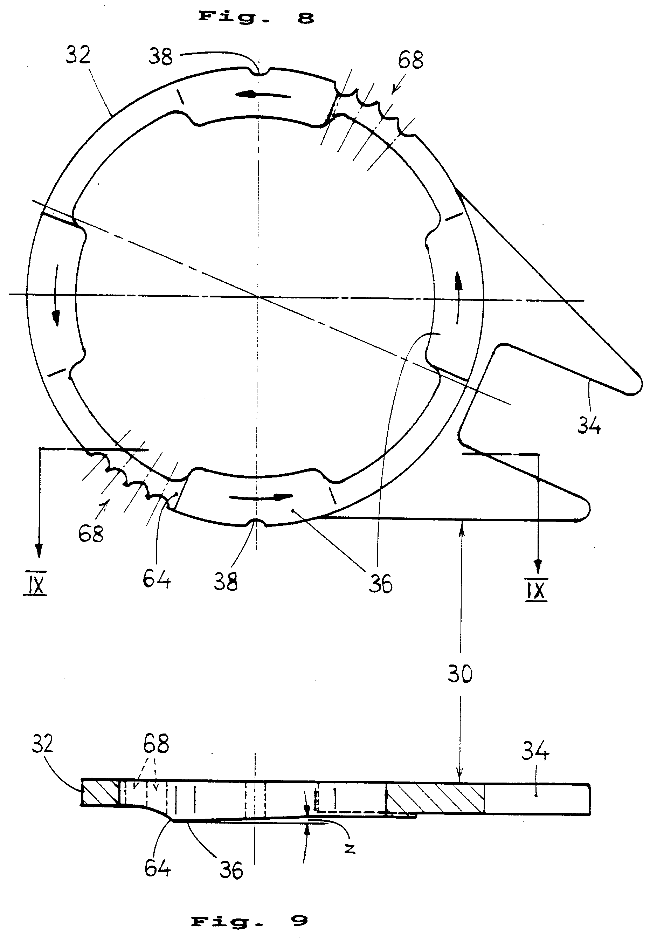

Eine etwas abgewandelte Spannplatte 22 ist in Fig. 6 und 7 dargestellt; dazu gehört ein abgewandelter Spannring 30 gemäß Fig. 8 und 9. Diese Spannplatte 22 hat eine Aussparung 26 mit breiten Einlauf-Erweiterungen 46, neben denen sich weitere Ausnehmungen befinden, darunter eine mit 62 bezeichnete Nut. Diese Ausnehmungen unterstützen das Ansetzen und Entnehmen des Spannrings 30 mit Flachhebel 40 bzw. der Einheit, welche den Flacheisen-Hebel aufweist.

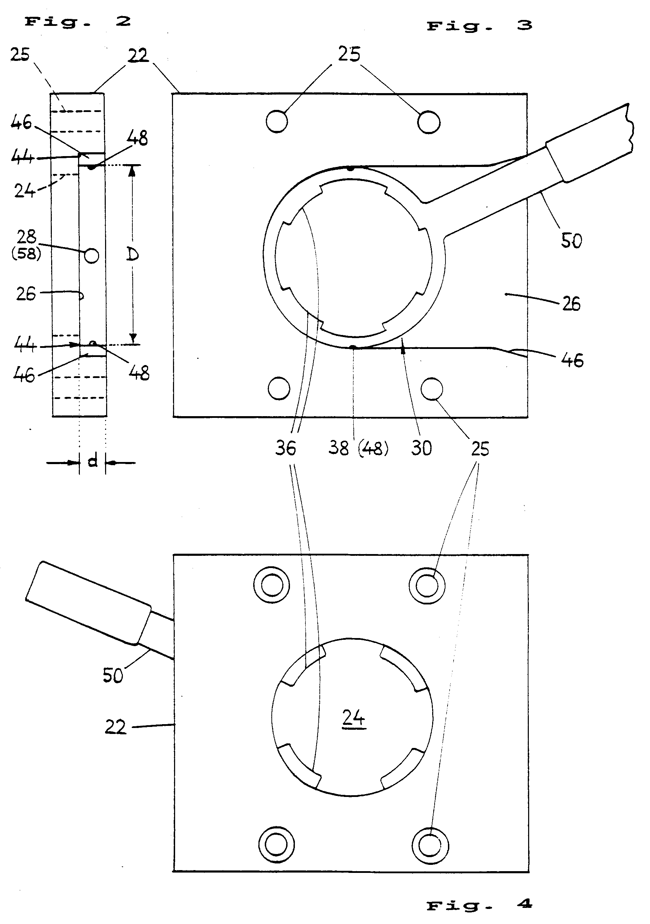

Wie im Ausführungsbeispiel der Fig. 2 und 3 sind zwei einander gegenüberliegende Kugelrasten 48 vorgesehen, und auch hier ist ein Paßstift 28 in der Spannplatte 22 vorhanden, wobei zwei Fixierstellungen lediglich mittels zweier Gewindelöcher angedeutet sind, in die ein (nicht gezeichneter) Gewindestift einsetzbar ist.

Man entnimmt den Fig. 8 und 9, daß der Spannring 30 in diesem Ausführungsbeispiel zwei Kerbenreihen 68 aufweist, die einander gegenüberliegen und mit dem Kugelrastenpaar 48 der Spannplatte 22 zusammenwirken. Die Kerben dieser Reihen 68 liegen unmittelbar nebeneinander an einer steileren Rückflanke 64 je eines Gegenkeils 36, dessen Keilwinkel z aus Fig. 9 ersichtlich ist. Die Kerbenreihen 68 halten den eingesetzten Spannring 30 in einer der Rastpositionen, so daß jeweils eine Kerbe von der zugeordneten Kugelraste 48 erfaßt wird, wenn sich der Spannring 30 in geeigneter Winkellage befindet. Pfeile auf den Gegenkeilen 36 zeigen die Arretierrichtung für den Spannring 30 an. Ihn anzusetzen bzw. zu entnehmen, um einen zugeordneten Zentrierring 14 einer Werkzeughälfte 10 (siehe Fig. 5) wahlweise zu verriegeln oder freizugeben, wird durch diese Ausgestaltung stark erleichtert. Zugleich wird die Arbeitssicherheit erhöht, weil der von der Kugelrastung 48/68 gehaltene Spannring 30 in seiner vorläufigen Position verbleibt, bis er gewollt erfaßt und bewegt wird. Außerdem ist es möglich, die Zentriereinrichtung einstweilig zu justieren und sie nach Vornahme einer endgültigen Justierung festzusetzen oder freizugeben.

Man erkennt, daß die Erfindung für geteilte Werkzeuge von Spritzgießmaschinen, wobei jede Werkzeughälfte 10 einen Zentrierring 14 mit radial ausspringenden Keilflächen 16 hat, eine Schnellspannvorrichtung mit einer Spannplatte 22 vorsieht, durch deren Mittenbohrung 24 der Zentrierring 14 einführbar ist, den ein Spannring 30 mit radial einspringenden Gegenkeilflächen 36 durch selbsthemmende Bajonettverbindung arretiert. Die Spannplatte 22 hat rückseitig eine der Dicke d und dem äußeren Umfang des Spannrings 30 angepaßte, U-förmige Abflachung 26, welche die Mittenbohrung 24 als Stufe 44 umgibt und eine Einlauf-Erweiterung 46 aufweist. Ein radial zur Mittenbohrung 24 verstellbarer, gegebenenfalls federbelasteter Paßstift 28 kann von einer Schmalseite der Spannplatte 22 her betätigt werden, um in eine Außennut 18 am Zentrierring 14 einzurasten. Federnde Rasten 48 an der Mittenbohrung 24 fixieren Außenumfangs-Kerben 38, 68 des Spannrings 30, der außen eine Stecköffnung 34 für einen Flachhebel 40 mit Griff 42 haben oder mit einem Flacheisen-Hebel 50 einstückig sein kann. Zwischen der Spannplatte 22 und einer Maschinenplatte 12 kann eine Wärmedämmplatte 52 befestigt sein.

Das Spannsystem 20 eignet sich auch zum Spannen auf Werkzeugmaschinen, zur Futterbefestigung auf Drehmaschinen usw. Es verkürzt die Rüstzeiten auf ein Minimum und erlaubt es, Kühlwasser- und Luftleitungen bequem anzukuppeln. Die aus hochwertigem Stahl bestehenden Spannplatten 22 gewährleisten, daß herkömmlich nicht selten auftretende Beschädigungen an Maschinen-Aufspannplatten, bei denen ausgerissene Gewindebohrungen oft unvermeidlich waren, hier nicht vorkommen. Außerdem ist hohe Unfallsicherheit gegeben, weil überstehende Teile fehlen, die Verletzungen hervorrufen könnten. Ferner ist es nicht möglich, daß zusätzliche Werkzeuge - die man hier nicht benötigt - infolge von Schraubenbruch oder mangelhaftem Spannen herabstürzen könnten, was nach dem Stand der Technik passieren konnte.

## Patentansprüche

1. Schnellspannvorrichtung (20) insbesondere für Spritzgießmaschinen, die eine Schließeinheit für Werkzeughälften (10) mit einem Zentrierring (14) haben, der abschnittsweise radial auswärts vorspringende Keilflächen (16) hat, durch eine Mittenbohrung (24) einer Spannplatte (22) axial einführbar und rückseitig durch einen Spannring (30) mit radial einspringenden Gegenkeilflächen (36) bajonettartig selbsthemmend arretierbar ist, wobei die Spannplatte (22) rückseitig eine der Dicke (d) des Spannrings (30) angepaßte Abflachung (26) hat, welche die Mittenbohrung (24) als Stufe (44) umgibt und eine Einlauf-Erweiterung (46) aufweist, dadurch **gekennzeichnet**, daß die Abflachung (26) dem äußeren Umfang des Spannrings (30) U-förmig angepaßt ist und daß in die Abflachungs-Stufe (44) neben der Mittenbohrung (24) radial federnde Rasten (48) ragen, die mit Ausnehmungen (38) am Außenumfang (30) des Spannrings (30) lagefixierend zusammenwirken.

2. Vorrichtung nach Anspruch 1, dadurch **gekennzeichnet**, daß der Spannring (30) in einer Offen-Stellung durch zwei einander diametral gegenüberliegende Außenumfangs-Kerben (38) mit zwei zugeordneten Kugelrasten (48) am Innenumfang der Stufe (44) verrastbar ist.

3. Vorrichtung nach Anspruch 2, dadurch **gekennzeichnet**, daß am Außenumfang (32) des Spannrings (30) zwei Reihen (68) von einander diametral gegenüberliegenden Kerben vorhanden sind, die mit den Kugelrasten (44) der Spannplatte (22) zusammenwirken.

4. Vorrichtung nach Anspruch 3, dadurch **gekennzeichnet**, daß die Kerben jeder Reihe (68) unmittelbar nebeneinander angeordnet sind und daß jede Reihe (68) zumindest drei Kerben gleicher Form aufweist.

5. Vorrichtung nach Anspruch 3 oder Anspruch 4, dadurch **gekennzeichnet**, daß die Kerbenreihen (68) jeweils an einer Rückflanke (64) eines Gegenkeils (36) angeordnet sind.

6. Vorrichtung nach einem der Ansprüche 1 bis 5, dadurch **gekennzeichnet**, daß der Spannring (30) außen eine Stecköffnung (34) für ein Betätigungs-Hilfsmittel aufweist, vorzugsweise für einen Flachhebel (40) mit Griff (42).

7. Vorrichtung nach wenigstens einem der Ansprüche 1 bis 6, dadurch **gekennzeichnet**, daß sie mittels eines Adapters zentrierbar ist, indem dieser anstelle eines Zentrierrings (14) in die Mittenbohrung (24) eingepaßt und nun die Spannplatte (22) mit einer Maschinenplatte (12) fest verschraubt wird, worauf der Adapter entfernt und der Zentrierring (14) der Werkzeughälfte (10) eingesetzt wird.

8. Vorrichtung insbesondere nach einem der Ansprüche 1 bis 7, dadurch **gekennzeichnet**, daß in der Spannplatte (22) an der Mittenbohrung (24) ein radial zu ihr verstellbarer Paßstift (28) vorhanden ist, dessen Stärke der Weite von Außennuten (18) an dem Zentrierring (14) entspricht.

9. Vorrichtung nach Anspruch 8, dadurch **gekennzeichnet**, daß der Zentrierring (14) vier in Winkelabständen von je 90° angeordnete Außennuten (18) aufweist.

10. Vorrichtung wenigstens nach Anspruch 9, dadurch **gekennzeichnet**, daß der Zentrierring (14) mit vier Schraublöchern (54) versehen ist, die radial innerhalb der Keilvorsprünge (16) so angeordnet sind, daß ihre Durchmesser-Verbindungslinien unter 45° zu denjenigen der Außennuten (18) stehen.

11. Vorrichtung nach einem der Ansprüche 6 bis 8, dadurch **gekennzeichnet**, daß der Paßstift (28) in einer Führungsbohrung (58) längsbeweglich und in wenigstens zwei vorgegebenen Positionen verrastbar ist.

12. Vorrichtung nach einem der Ansprüche 8 bis 11, dadurch **gekennzeichnet**, daß der Paßstift (28) federbelastet und von einer Schmalseite der Spannplatte (22) her betätigbar ist.

## Claims

1. A quick fastening apparatus (20), in particular for injection molding machines having a closing unit for tool halves (10) including a centering ring (14) which is sectionwise provided with radially outwardly projecting wedged surfaces (16), which can axially be inserted through a central hole (24) of a fastening plate (22) and can be locked on the back side by a clamping ring (30) with radially inwardly projecting counter-wedge surfaces (36) in self-locking fashion in the manner of a bayonet, the fastening plate (22) being provided on the back side with a flattened portion (26) which is adapted to thickness (d) of said clamping ring (30) and which surrounds said central hole (24) as a step (44) and comprises an enlarged inlet portion (46),
**characterized in** that said flattened portion (26) is adapted to the outer circumference of said clamping ring (30) in U-shaped configuration, and that radially resilient catches (48) which cooperate with recesses (38) on the outer circumference (30) of said clamping ring (30) in position-fixing fashion project into said flattened step (44) next to said central hole (24).

2. The apparatus according to claim 1,
**characterized** in that said clamping ring (30) being in an open position can be locked by two diametrically opposite outer circumferential notches (38) with two associated ball-shaped catches (48) on the inner circumference of said step (44).

3. The apparatus according to claim 2,
**characterized** in that two rows (68) of diametrically opposite notches that cooperate with said ball-shaped catches (44) of said fastening plate (22) are provided on the outer circumference (32) of said clamping ring (30).

4. The apparatus according to claim 3,
**characterized in** that the notches of each of said rows (68) are arranged directly next to one another and that each row (68) has at least three notches of the same shape.

5. The apparatus according to claim 3 or 4,
**characterized** in that said rows of notches (68) are each arranged on a back flank (64) of a counter-wedge (36).

6. The apparatus according to any of claims 1 to 5,
**characterized** in that said clamping ring (30) is externally provided with an insertion opening (34) for an actuating means, preferably for a flat lever (40) with handle (42).

7. The apparatus according to at least one of claims 1 to 6, **characterized** in that it can be centered by means of an adapter in that, instead of a centering ring (14), said adapter is fitted into said central hole (24) and that said fastening plate (22) is now fixedly screwed to a machine plate (12), whereupon said adapter is removed and said centering ring (14) of said tool half (10) is inserted.

8. The apparatus, in particular according to any of claims 1 to 7, **characterized** in that said fastening plate (22) has provided on said central hole (24) a locating pin (28) which is radially adjustable thereto and whose thickness corresponds to the width of outer grooves (18) on said centering ring (14).

9. The apparatus according to claim 8,
**characterized** in that said centering ring (14) comprises four outer grooves (18) arranged at angular distances of 90° each.

10. The apparatus according to at least claim 9,
**characterized** in that said centering ring (14) is provided with four screw holes (54) that are radially arranged inside said wedged projections (16) such that their diameter connection lines are at 45° relative to those of said outer grooves (18).

11. The apparatus according to any of claims 6 to 8,
**characterized** in that said locating pin (28) is longitudinally movable in a guide hole (58) and adapted to be locked in at least two predetermined positions.

12. The apparatus according to any of claims 8 to 11,
**characterized** in that said locating pin (28) is spring-loaded and adapted to be operated from a narrow side of said fastening plate (22).

## Revendications

1. Dispositif de fixation rapide (20), notamment pour des machines de moulage par injection, qui ont une unité de serrage pour des moitiés d'outils (10) avec une bague de centrage (14) qui a par sections des surfaces de clavetage (16) en saillie radiale vers l'extérieur, qui peut être introduite axialement par une perforation centrale (24) d'une plaque de serrage (22) et fixée, en se bloquant à la manière d'un verrouillage à baïonnette, sur le côté arrière par une bague de serrage (30) ayant des surfaces de contre-clavetage (36) en saillie radiale, la plaque de serrage (22) ayant sur le côté arrière un aplatissement (26) adapté à l'épaisseur (d) de la bague de serrage (30), entourant la perforation centrale (24) comme un étage (44) et ayant un élargissement d'entrée (46), caractérisé en ce que l'aplatissement (26) est adapté en forme de U à la circonférence extérieure de la bague de serrage (30), et que des loqueteaux à ressorts radiaux (48), qui vont jusque dans l'étage aplati (44) à côté de la perforation centrale (24), agissent ensemble avec des évidements (38) sur la circonférence extérieure (30) de la bague de serrage (30), produisant ainsi le blocage.

2. Dispositif selon la revendication 1, caractérisé en ce que la bague de serrage (30) peut s'enclencher en une position ouverte avec deux loqueteaux à bille (48) correspondants sur la circonférence intérieure de l'étage (44), au moyen de deux encoches (38) diamétralement opposées sur la circonférence extérieure.

3. Dispositif selon la revendication 2, caractérisé en ce qu'il y a sur la circonférence extérieure (32) de la bague de serrage (30) deux rangées (68) d'encoches diamétralement opposées, qui agissent ensemble avec les loqueteaux à bille (44) de la plaque de serrage 22.

4. Dispositif selon la revendication 3, caractérisé en ce que les encoches de chaque rangée (68) sont disposées directement les unes à côté des autres et que chaque rangée (68) a au moins trois encoches uniformes.

5. Dispositif selon la revendication 3 ou la revendication 4, caractérisé en ce que les rangées d'encoches (68) sont disposées respectivement sur un flanc arrière (64) d'une contre-clavette (36).

6. Dispositif selon l'une des revendications 1 à 5, caractérisé en ce que la bague de serrage (30) a sur l'extérieur une ouverture d'enfichage (34) pour un moyen d'actionnement auxiliaire, de préférence pour un levier plat (40) avec une poignée (42).

7. Dispositif selon au moins une des revendications 1 à 6, caractérisé en ce qu'il peut être centré au moyen d'un adaptateur, en emboîtant celui-ci dans la perforation centrale (24) à la place d'une bague de centrage (14), et en vissant alors la plaque de serrage (22) à une plaque (12) de la machine, à la suite de quoi on enlève l'adaptateur et l'on place la bague de centrage (14) de la moitié d'outil (10).

8. Dispositif selon notamment une des revendications 1 à 7, caractérisé en ce qu'il y a dans la plaque de serrage (22) une goupille de serrage (28) donnant sur la perforation centrale (24) et réglable radialement par rapport à cette denière, dont l'épaisseur correspond à la largeur de rainures extérieures (18) sur la bague de centrage (14).

9. Dispositif selon la revendication 8, caractérisé en ce que la bague de centrage (14) a quatre rainures extérieures (18) disposées à des écarts d'angle de respectivement 90°.

10. Dispositif selon au moins la revendication 9, caractérisé en ce que la bague de centrage (14) est pourvue de quatre trous de vissage (54) disposés radialement à l'intérieur des saillies de clavetage (16), de telle manière que leurs lignes de jonction diamétrales soient à 45° par rapport aux lignes diamétrales des rainures extérieures (18).

11. Dispositif selon l'une des revendications 6 à 8, caractérisé en ce que la goupille de serrage (28) peut se déplacer dans une perforation de guidage (58) dans le sens de la longueur et s'enclencher dans au moins deux positions données.

12. Dispositif selon l'une des revendications 8 à 11, caractérisé en ce que la goupille de serrage (28) est soumise à l'action d'un ressort et peut être actionnée à partir d'un chant de la plaque de serrage (22).
